# FASCICULE DE BREVET EUROPEEN

(11) **EP 0 677 694 B1**
(45) Date de publication et mention de la délivrance du brevet: **04.08.1999**
(21) Numéro de dépôt: 95400666.4
(22) Date de dépôt: 24.03.1995
(51) Int. Cl.: F17C 3/08, F17C 13/08

(54) **Conteneur à double paroi pour le transport et le stockage d'un gaz liquéfié**
Doppelwandiger Behälter zum Transport und Lagerung von Flüssiggas
Double-walled container for transporting and storing liquefied gas

(30) Priorité: 12.04.1994 US 225996
(43) Date de publication de la demande: 18.10.1995
(73) Titulaire: HYDRO-QUEBEC, Montréal Québec H2Z 1A4 (CA); ECONODEN INC., Montréal, Québec H3A 1R8 (CA)
(72) Inventeur: Shama, Elie W., Duvernay, Québec, H7E 5C2 (CA); Kluyskens, Dominique, St-Bruno, Québec, J3V 4P6 (CA); Legrand, Bertrand, St-André Est, Québec, J0V 1X0 (CA)
(74) Mandataire: Keib, Gérard

(56) Documents cités:
- EP-A- 0 411 505
- DE-A- 2 548 356
- DE-A- 3 001 922
- US-A- 3 425 585
- US-A- 3 782 128
- PATENT ABSTRACTS OF JAPAN vol. 11, no. 65 (E-484) 27 Février 1987 & JP-A-61 224 472 (TOSHIBA CORPORATION) 6 Octobre 1986

## Description

La présente invention a pour objet un conteneur à double paroi pour le transport et le stockage d'un gaz liquéfié d'un liquide cryogénique tel que l'hydrogène à basse température.

Plus particulièrement, l'invention se rapporte à un conteneur à double paroi du type ci-dessus mentionné qui présente un poids allégé et une très grande dimension et qui peut être utilisé dans le transport international de l'hydrogène liquide par air, mer, rail ou route.

Des conteneurs à double paroi comprenant une enceinte interne montée à l'intérieur d'une enveloppe d'isolation externe sont bien connus et largement utilisés pour le transport et stockage de gaz liquéfié. Pour que leur utilisation soit efficace et sans danger, de tels conteneurs doivent respecter de nombreuses exigences structurelles relatives à leurs conditions d'utilisation. Ils doivent également respecter des réglementations internationales et/ou nationales relatives au transport des produits dangereux.

Une de ces obligations est que la conduction thermique entre la surface externe de l'enceinte interne qui est froide et la surface interne de l'enveloppe extérieure doit être aussi basse que possible. En pratique, une très bonne isolation est difficile à obtenir.

Une autre obligation ayant un rapport très étroit avec la première concerne le temps de stockage et de transport des gaz liquéfiés à l'intérieur du conteneur lorsque celui-ci est manoeuvré par air, rail, route ou mer. Le temps de transport peut parfois être très long et une autonomie d'au moins trente (30) jours est souvent exigée. Lorsque des matériaux conducteurs de chaleur tels que l'acier inoxydable sont utilisés pour fabriquer le conteneur et qu'aucune isolation n'est réalisée, une autonomie de quelques jours peut seulement être atteinte.

Une autre obligation concerne le poids du conteneur qui doit être faible. Si le conteneur est fabriqué exclusivement en un matériau lourd tel qu'en acier inoxydable, sa taille devra nécessairement être réduite, réduisant de cette façon la quantité de gaz liquéfié devant être stockée et transportée. Ceci, en contrepartie, limitera la quantité de gaz liquéfié par conteneur et augmentera le prix du transport. À ce propos, il faut mentionner que les standards, pour tous les conteneurs à double paroi en construction d'acier actuellement en utilisation, présentent habituellement une dimension seulement moyenne ou petite, et ont un poids mort rapporté à une proportion de charge compris entre 6:1 et 8:1.

Pour résoudre ce problème, il a déjà été proposé de fabriquer des conteneurs à double paroi avec des matériaux de polymère étanches aux gaz et à un poids allégé. Ceci a cependant été réalisé pour uniquement des conteneurs très petits tels que ceux vendus sous la marque de commerce *THERMOS* (voir également le brevet américain US-A-n° 5,150,812).

Une autre exigence supplémentaire est relative à la nécessité d'avoir des moyens efficaces et sûrs pour monter et supporter l'enceinte interne à l'intérieur de l'enveloppe externe. En effet, les moyens de support peuvent être conçus pour absorber sans danger toutes sortes de forces, telles que les forces d'expansion, de décélération ou d'accélération lors du transport, forces dues aux mouvements du convoyeur lors du transport par route ou par rail, aux agitations de l'océan lors du transport par mer et aux décollage et atterrissage d'un avion lors du transport par air. Il a déjà été proposé, pour positionner et stabiliser l'enceinte interne à l'intérieur d'une enveloppe externe de telle sorte qu'un espace d'isolation soit laissé entre l'enceinte interne et l'enveloppe externe, d'utiliser des cordes, des tirants, des barres articulées ou des rails de glissement. Il est évident que ces constructions sont non seulement chères mais également très compliquées et lourdes (voir, par exemple, les brevets européen EP-A-063,714 et anglais GB-A-1,220,251 de MESSER GRIESHEIM G.m.b.H).

La demande allemande DE-A-3,001,922 décrit un conteneur à double paroi pour le transprt et le stockage d'un gaz liquifié à basse température. Ce conteneur comprend une enceinte interne montée par ses deux extrémités au sein d'une enveloppe externe. L'enceinte interne et l'enveloppe externe forment ensemble un espace d'isolation fermé qui est totalement rempli de fibres de verre comprimées qui servent à la fois d'isolant et de renfort structurel pour l'enveloppe externe. Les deux extrémités opposées de l'enceinte interne sont connectées de façon mobile à l'enveloppe externe de façon à permettre de compenser l'expansion thermique de l'enceinte interne et de l'enveloppe externe l'une par rapport à l'autre. Un tuyau servant à la fois à l'alimentation et à l'échappement est prévu pour introduire et évacuer le gaz liquifié à l'intérieur de l'enceinte interne. Dans cette demande, l'enceinte interne et l'enveloppe externe sont toutes deux faites de métal et aucune référence n'est faite à la présence de moyens permettant de supporter et manoeuvrer le conteneur en usage.

La présente invention a pour premier objet un conteneur à double paroi pour le transport d'un gaz liquéfié, tel que l'hydrogène, par air, mer, route et rail, qui comprend une enceinte interne suspendue à l'intérieur d'une enveloppe externe, avec des moyens de support appropriés permettant aux forces d'expansion, de décélération et d'accélération exercées sur l'enceinte interne d'être absorbées sans risque lors du voyage par route, chemin de fer, air ou mer.

L'invention a en outre pour objet un conteneur à double paroi du type décrit ci-dessus dont l'enceinte interne est fabriquée en acier inoxydable renforcé ou non avec une couche de matériau composite et dont l'enveloppe externe est entièrement fabriquée en matériau composite permettant, de ce fait, d'obtenir à la fois un poids mort rapporté à une proportion de charge de 5:1 ou mieux et une augmentation considérable de la taille du conteneur.

L'invention a comme autre objet un conteneur à double paroi qui, grâce à l'utilisation maîtrisée d'un matériau composite avec une matière isolante et du vide, présente une autonomie augmentée jusqu'à trente jours ou plus sans perte excessive de produit et tout en résistant à toutes les pressions qui peuvent être exercées pendant le voyage.

L'invention a comme autre objet un conteneur à double paroi permettant le transport d'un gaz liquéfié de manière sécuritaire grâce à la conception à la fois de l'enceinte interne et de l'enveloppe externe qui est adaptée à des risques prévisibles en mer, air, sur la route ou rail et/ou pendant la manoeuvre.

Elle a comme autre objet un conteneur à double paroi pour le transport d'un gaz liquéfié qui est facile et simple à fabriquer et à utiliser, qui présente une bonne isolation thermique, une bonne résistance mécanique et qui peut facilement être surdimensionnée grâce à son faible poids par rapport aux conteneurs connus de la même taille.

Conformément à l'invention, les objets ci-dessus sont atteints avec un conteneur à double paroi pour le transport et le stockage d'un gaz liquéfié à basse température qui comprend:
- une enceinte interne contenant le gaz liquéfié présentant un axe longitudinal et une paire d'extrémités opposées sur l'axe longitudinal; et
- une enveloppe externe entourant ladite enceinte interne, l'enveloppe externe étant coaxiale à l'enceinte et présentant une dimension de manière à présenter un espace d'isolation fermé tout autour de l'enceinte interne, l'enveloppe externe présentant une paire d'extrémités opposées sur l'axe longitudinal.

L'enceinte interne est suspendue par ses extrémités opposées à l'intérieur de l'enveloppe externe.

Un tuyau d'alimentation obturable passe au travers de l'enveloppe externe et de l'enceinte interne pour introduire le gaz liquéfié à l'intérieur de l'enceinte interne. D'une manière similaire, un tuyau d'échappement obturable passe également au travers de l'enceinte interne et de l'enveloppe externe pour évacuer le gaz liquéfié de l'enceinte interne.

Selon l'invention, ce conteneur est caractérisé en ce que l'espace d'isolation fermé entre l'enceinte interne et l'enveloppe externe est gardé sous vide et la surface externe de l'enveloppe interne est entièrement recouverte d'une fine couche d'un matériau d'isolation de manière à réduire la perte de chaleur en fonctionnement.

Ce conteneur est également caractérisé en ce que son enveloppe externe est fabriquée en matériau composite à base de fibres de carbone et/ou de verre. De plus, une des extrémités opposées de l'enceinte est reliée rigidement à l'extrémité adjacente de l'enveloppe tandis que l'autre extrémité opposée de l'enceinte est reliée par glissement à l'autre extrémité adjacente de l'enveloppe de manière à permettre une expansion thermique de l'enceinte interne et de l'enveloppe externe, l'une par rapport à l'autre. Enfin, des moyens sont prévus aux extrémités opposées de l'enveloppe externe pour supporter et manoeuvrer le conteneur à double paroi.

De préférence, la fine couche d'un matériau d'isolation recouvrant la surface externe de l'enceinte interne est constitué d'un matériau composite à base de fibre de verre précompressée. Ce matériau ainsi que celui formant la couche externe supportent le vide et de très basses températures et permettent une réduction substantielle du poids du conteneur qui peut être aussi importante que 25% par comparaison avec les conteneurs connus de la même dimension. De préférence aussi, des moyens de renforcement internes peuvent être utilisés à l'intérieur de l'enceinte interne pour améliorer la force mécanique de celle-ci.

L'invention et ses nombreux avantages seront mieux compris à la lecture de la description suivante non restrictive d'une réalisation préférentielle donnée en se référant aux figures annexées dans lesquelles les mêmes références numériques sont utilisées pour identifier les mêmes éléments structurels.

La Figure 1 est une vue en perspective partiellement découpée d'un conteneur à double paroi selon l'invention.

La Figure 2 est une vue de côté en coupe du conteneur à double paroi montré à la Figure 1.

La Figure 3 est une vue arrière du conteneur à double paroi montré à la Figure 1.

La Figure 4 est une vue de face en coupe du conteneur à double paroi montré à la Figure 1, selon les lignes IV-IV de la Figure 2.

La Figure 5 est une vue en coupe élargie de l'enceinte interne du conteneur montré à la Figure 1 montrant une première réalisation de l'invention.

La Figure 6 est une vue en coupe élargie semblable à celle de la Figure 5, montrant une autre réalisation de l'invention.

Le conteneur à double paroi 1 selon l'invention, tel que montré dans les Figures annexées, est destiné à être utilisé pour le transport et le stockage d'un gaz liquéfié, tel que l'hydrogène liquide, par air, mer, route ou rail.

Ce conteneur à double paroi 1 comprend une enceinte interne 3 contenant le gaz liquéfié et une enveloppe externe 5 entourant l'enceinte interne 3. Il peut présenter une forme cylindrique et avoir une longueur d'environ 25 m et un diamètre externe d'environ 3,2 m. Son volume peut être aussi élevé que 120 m³.

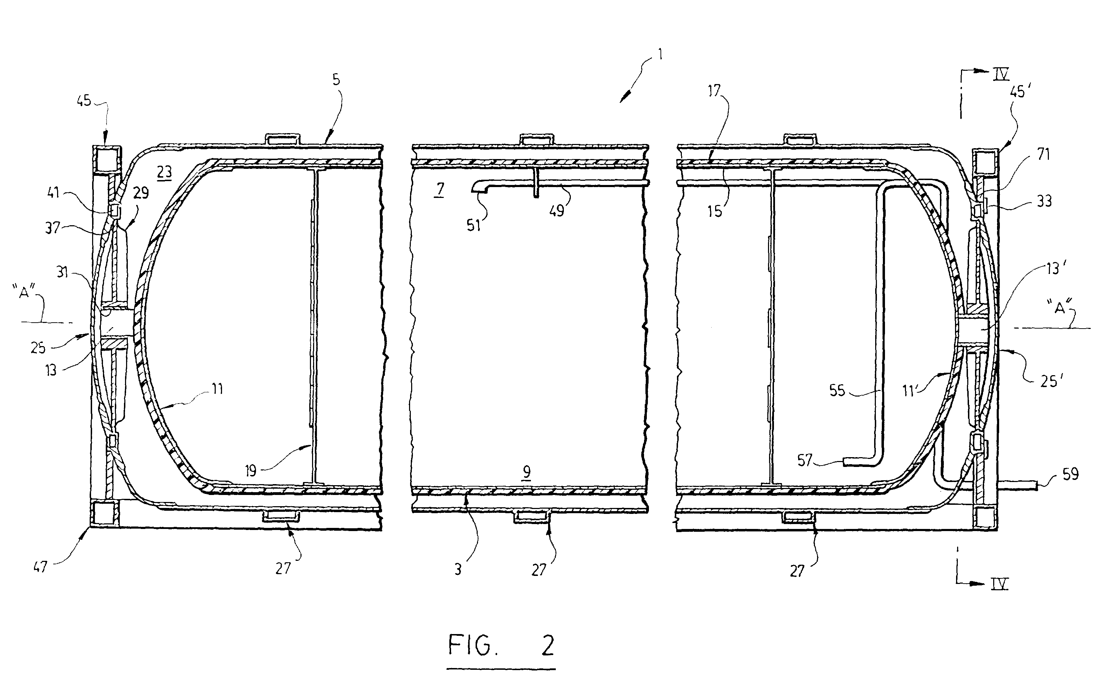

L'enceinte interne 3 contenant le gaz liquéfié est fabriquée en acier. Comme cela est mieux montré à la Figure 2, il est de forme généralement cylindrique et présente un axe "A" longitudinal s'étendant horizontalement, une surface supérieure 7, une surface inférieure 9 et une paire d'extrémités opposées 11,11'. Chacune de ces extrémités 11, 11' comprend une projection tubulaire solidaire 13,13' s'étendant le long de l'axe longitudinal "A".

L'enceinte interne 3 présente également une surface externe 15 qui est entièrement recouverte d'une fine couche d'un matériau d'isolation 17. Le matériau d'isolation 17 consiste préférentiellement en une pluralité de feuilles en aluminium entre lesquelles sont insérées des couches de tissu d'isolation (non montrées sur les figures). Cette isolation spécifique permet de conserver le gaz liquéfié à une température aussi basse que 20°K pendant trente (30) à soixante (60) jours, ce qui est un des objets de l'invention. Avec une telle isolation, la conductivité thermique du conteneur peut être égale ou inférieure à 0,5 W/cm.°K.

L'enceinte interne 3 comprend en outre des moyens de renforcement internes 19 pour maintenir la structure de l'enceinte interne 3. Chaque moyen de renforcement 19 comprend préférentiellement une bague 20 présentant en coupe une forme en "T" soudée intérieurement à l'enceinte interne 3. Chaque bague 20 supporte une pluralité de plaques de renforcement 21 qui sont parallèles les uns aux autres dans chaque bague et qui s'étendent transversalement à l'enceinte 3. Les plaques 21 de chaque bague 20 sont disposées à un angle différent de celui de chaque bague adjacente 20. Cet arrangement particulier peut réduire les mouvements incontrôlés du gaz liquéfié lors du transport.

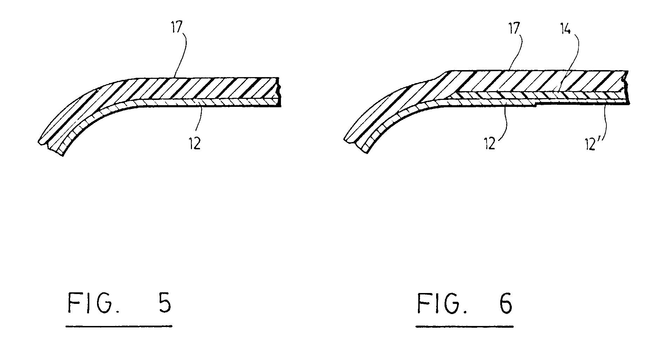

Selon une première réalisation de l'invention, l'enceinte interne 3 peut être fabriquée à partir d'une couche d'acier inoxydable 12 d'une épaisseur constante comme montré à la Figure 5. Selon une autre réalisation, la plus préférentielle de l'invention montrée à la Figure 6, l'enceinte interne 3 peut présenter une partie centrale de profil constant qui est fabriquée à partir d'une couche d'acier inoxydable 12' présentant une épaisseur inférieure à celle de l'épaisseur moyenne de la couche 12 formant les parties d'extrémités de l'enceinte. Cette partie centrale est ensuite renforcée par une couche externe 14 de matériau composite en fibre de carbone et/ou de verre, permettant de ce fait une réduction considérable en poids sans aucune réduction de résistance.

En se référant à nouveau à la Figure 2, l'enveloppe externe 5 entourant l'enceinte interne 3 est coaxiale à celle-ci et de telle dimension de manière à fournir un espace d'isolation fermé 23 tout autour de l'enceinte interne 3. Cet espace d'isolation 23 est de préférence gardé sous vide à une pression de 10⁻³ torr ou moins, pour le propre objet d'isolation.

Avantageusement, l'enveloppe externe 5 est fabriquée entièrement en un matériau composite à base de fibres de carbone et/ou de verre. Elle présente une paire d'extrémités opposées 25,25' sur l'axe longitudinal "A" de l'enceinte interne 3 et comprend des moyens de renforcement externes 27 (voir Figure 2) qui consistent de préférence en une pluralité de nervures fabriquées en un matériau composite à base de fibre de verre, qui sont partie intégrante de l'enveloppe externe 5.

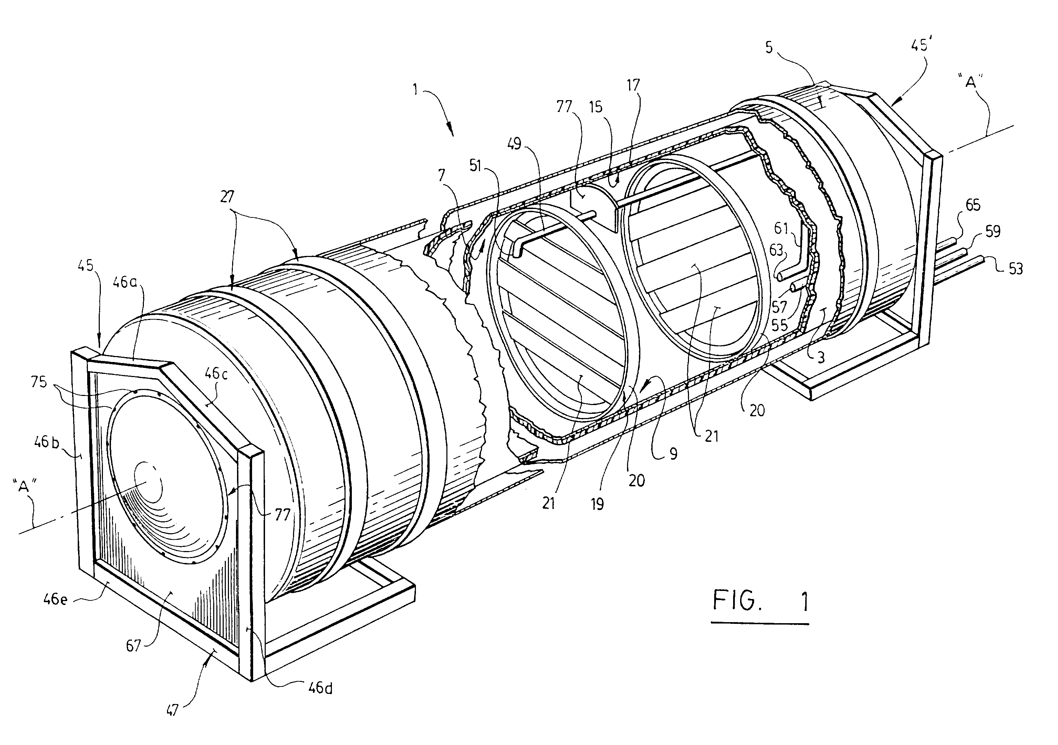

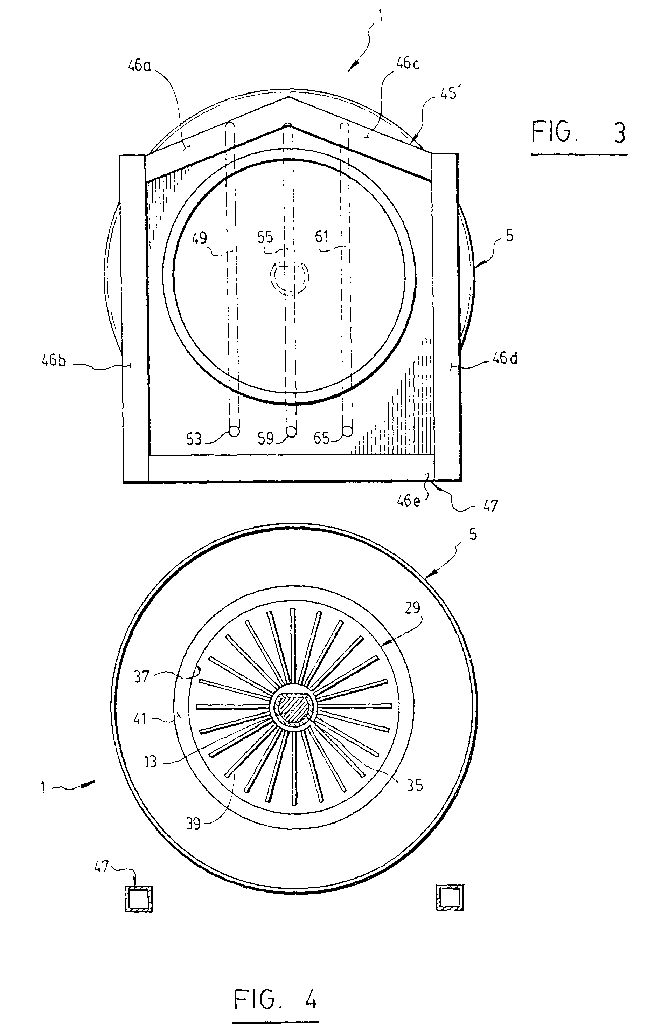

Des moyens sont prévus aux extrémités opposées 25,25' de l'enveloppe externe 5 pour suspendre l'enceinte interne 3 à l'intérieur de l'enveloppe externe 5. Ces moyens comprennent un support interne 29, montré aux Figures 1 et 4, qui est pourvu d'un orifice 31 destiné à recevoir et à porter la projection solidaire adjacente 13,13' de l'enceinte interne 3.

Comme montré aux Figures 2 et 4, le support interne 29 comprend une plaque de support circulaire 33 présentant un organe du type moyeu 35 positionné coaxialement à l'axe longitudinal "A". Cet organe du type moyeu 35 définit l'orifice 31 qui reçoit et porte, d'une façon non rotative, la projection adjacente 13,13' de l'enceinte interne 3. Pour obtenir la non-rotation requise, l'organe du type moyeu 35 doit ne pas présenter une forme cylindrique (comme cela est montré) ou doit comporter une clé (non montrée) destinée à être engagée dans une fente prévue dans la projection adjacente. La plaque de support circulaire 33 présente un anneau périphérique 37 et une pluralité de nervures de renforcement 39 qui s'étendent radialement à partir de l'organe du type moyeu 35 vers l'anneau périphérique 37. Le support interne 29 est fixé à l'enveloppe externe 5 à l'intérieur de celle-ci par une liaison préférentielle du type boulons, de son anneau périphérique 37 vers une bague de renforcement coaxiale 41 qui peut être fabriquée en acier et encastrée dans l'enveloppe externe 5. Ainsi, l'enceinte interne 3 est suspendue par ses extrémités opposées 11,11' à l'intérieur de l'enveloppe externe 5. Conformément à l'invention, une 11 des extrémités opposées de l'enceinte interne 3 est reliée rigidement à l'extrémité adjacente 25 de l'enveloppe 5 tandis que l'autre extrémité opposée 11' de l'enceinte 5 est reliée par glissement à l'autre extrémité adjacente 25' de l'enveloppe 5 de manière à permettre une expansion thermique de l'enceinte interne 3 et de l'enveloppe externe 5 l'une par rapport à l'autre. Lorsque le conteneur mesure 25 m de long, cette expansion peut être aussi élevée que 10 cm. Tel que mentionné ci-dessus, les projections solidaires 13,13' et l'orifice correspondant 31 présentent une même forme non cylindrique pour empêcher une rotation non désirée de l'enceinte interne 3 par rapport à l'enveloppe externe 5 le long de l'axe longitudinal "A". Cette réalisation est mieux montrée à la Figure 4.

Le conteneur à double paroi 1 est supporté et manoeuvré par des moyens appropriés montés aux extrémités opposées 25,25' de l'enveloppe externe 5, comme cela est mieux montré aux Figures 2 et 3. Ces moyens comprennent une paire d'organes de structure externes 45,45' reliés extérieurement aux extrémités opposées 25,25' de l'enveloppe externe 5, respectivement. Chacun desdits organes de structure externes 45,45' est fixé rigidement à la bague de renforcement 41 encastrée dans chacune des extrémités correspondantes 25,25' de l'enveloppe externe 5 et comprend une base plate 47 dimensionnée et positionnée à une distance telle de l'axe longitudinal "A" que le conteneur à double paroi 1 puisse être posé sur une surface plate, selon "l'axe longitudinal" s'étendant parallèlement à la surface plate comme montré sur les dessins. Comme montré aux Figures 1 et 3, chaque organe de structure externe 45,45' présente une forme pentagonale et est pourvu de cinq (5) bords renforcés 46a, 46b, 46c, 46d et 46e. Le bord 46e définit la base plate 47 du moyen de support. L'organe de structure externe 45,45' peut être relié à la bague de renforcement 41 encastrée dans une extrémité 25 ou 25' de l'enveloppe externe 5 par tous moyens disponibles tels que des boulons. Pour cet objet, l'organe de structure 45,45' peut comprendre une paroi centrale 67 présentant un orifice central 71 pour recevoir les extrémités 25,25' de l'enveloppe externe 5. L'orifice 71 est bordé par une bague 77 comprenant des trous destinés à recevoir les boulons de fixation 75 faisant saillie de la bague de renforcement 41 de l'enveloppe externe 5.

Le conteneur à double paroi 1 peut être rempli avec un gaz liquéfié tel que l'hydrogène liquide au moyen d'un tuyau d'alimentation 49 passant au travers de l'enveloppe externe 5 et de l'enceinte interne 3. Évidemment, le tuyau d'alimentation 49 doit être obturable au moyen d'une valve appropriée pour être opérationnel. Le tuyau d'alimentation obturable 49 présente une sortie 51 positionnée substantiellement à mi-longueur à l'intérieur de l'enceinte interne 3 proche de la surface supérieure de celle-ci de manière à réaliser un remplissage simultané, égal et régulier de toutes les parties de l'enceinte interne 3 de gaz liquéfié. Il présente une entrée obturable 53 s'étendant vers l'extérieur de l'enveloppe externe 5 substantiellement au niveau de la surface inférieure 9 de l'enceinte interne 3, permettant une liaison avec une pompe extérieure (non montrée) pour remplir l'enceinte interne 3 de gaz liquéfié. Le tuyau d'alimentation est maintenu à l'intérieur de l'enceinte interne 3 par des moyens de maintien 77 fixés à la surface supérieure 7 de l'enceinte interne 3.

Le conteneur à double paroi 1 peut être vidé au moyen d'un tuyau d'échappement obturable 55 passant au travers de l'enceinte interne 3 et de l'enveloppe externe 5. Le tuyau 55 refoule le gaz liquéfié de l'enceinte interne 3. Le tuyau d'échappement obturable 55 comprend une entrée 57 située à l'intérieur de l'enceinte interne 3 proche de la surface inférieure 9 de celle-ci pour une évacuation complète du gaz liquéfié et une sortie obturable 59 s'étendant vers l'extérieur de l'enveloppe externe 5 substantiellement au même niveau de la surface inférieure 9 de l'enceinte interne 3, la sortie obturable 59 pouvant être reliée à une pompe (non montrée) située à l'extérieur du conteneur 1 pour évacuer le gaz liquéfié.

Si désiré, l'enceinte interne 3 peut être pourvue d'un tuyau de gaz obturable 61 situé près du tuyau d'échappement 55, qui passe au travers de l'enceinte interne 3 et de l'enveloppe externe 5 pour injecter un gaz à l'intérieur de l'enceinte interne 3 afin de mettre sous pression l'enceinte interne et ainsi pousser le gaz liquéfié à l'extérieur de l'enceinte 3 par le tuyau d'échappement obturable 55 qui, dans un tel cas, n'a pas besoin d'être relié à une pompe. Ce tuyau de gaz 61 présente une entrée 63 située à l'intérieur de l'enceinte interne 3 proche de la surface inférieure 9 de celle-ci et une sortie obturable 65 s'étendant vers l'extérieur de l'enveloppe externe 5 substantiellement au même niveau de la surface inférieure 9 de l'enceinte interne 3.

Tous ces éléments principaux comprenant le tuyau d'alimentation obturable 49, le tuyau d'échappement 55 et le tuyau de gaz 61 sont fabriqués en un matériau rigide et s'étendent hermétiquement au travers des extrémités opposées 11,11', 25,25' de l'enceinte interne 3 et de l'enveloppe externe 5 qui sont reliées rigidement l'une à l'autre.

Évidemment, différentes modifications peuvent être apportées à la réalisation ci-dessus sans s'éloigner de la protection de l'invention telle que définie dans les revendications en annexe.

## Revendications

1. Conteneur (1) à double paroi pour le transport et le stockage d'un gaz liquéfié à basse température, ledit conteneur, comprenant:
- une enceinte interne (3) contenant le gaz liquéfié présentant un axe longitudinal et une paire d'extrémités opposées (11,11') sur ledit axe longitudinal;
- une enveloppe externe (5) entourant ladite enceinte interne, ladite enveloppe externe (5) étant coaxiale à l'enceinte (3) et présentant une dimension telle à fournir un espace d'isolation fermé (23) tout autour de l'enceinte interne, ladite enveloppe externe présentant une paire d'extrémités opposées (25,25') sur l'axe longitudinal;
- l'enceinte interne (3) étant suspendue par ses extrémités opposées (11,11') à l'intérieur de l'enveloppe externe (5);
- un tuyau d'alimentation obturable (49) passant au travers de l'enveloppe externe (5) et de l'enceinte interne (3) pour introduire le gaz liquéfié à l'intérieur de ladite enceinte interne; et
- un tuyau d'échappement obturable (55) passant au travers de l'enceinte interne (3) et de l'enveloppe externe (5) pour évacuer le gaz liquéfié de ladite enceinte interne;
caractérisé en ce que:
- l'espace d'isolation fermé (23) entre l'enceinte interne et l'enveloppe externe est gardé sous vide;
- l'enceinte interne (3) présente une surface externe entièrement recouverte d'une finé couche d'un matériau d'isolation (17);
- l'enveloppe externe (5) est fabriquée en un matériau composite à base de fibres de carbone et/ou de verre;
- une des extrémités opposées (11) de l'enceinte interne (3) est fixée rigidement à l'extrémité adjacente (25) de l'enveloppe externe (5) tandis que l'autre extrémité opposée (11') de l'enceinte est reliée par glissement à l'autre extrémité adjacente (25') de l'enveloppe de manière à permettre une expansion thermique de ladite enceinte interne et de ladite enveloppe externe l'une par rapport à l'autre; et
- des moyens (45,45') sont prévus aux extrémités opposées de l'enveloppe externe (5) pour supporter et manoeuvrer ledit conteneur (1) à double paroi.

2. Conteneur à double paroi selon la revendication 1, caractérisé en ce que le matériau d'isolation (17) recouvrant la surface externe de l'enceinte interne consiste en une pluralité de feuilles d'aluminium entre lesquelles sont insérées des couches de tissu d'isolation.

3. Conteneur à double paroi selon la revendication 1 ou 2, caractérisé en ce que l'enceinte interne (3) est fabriquée en acier inoxydable.

4. Conteneur à double paroi selon l'une quelconque des revendications 1 à 3, caractérisé en ce que l'enceinte interne (3) comprend une partie centrale de section constante et deux parties d'extrémités opposées, ladite partie centrale présentant une paroi (12') ayant une épaisseur plus faible que l'épaisseur moyenne de la paroi (12) des parties d'extrémités de celle-ci et étant renforcée par une couche externe (14) d'un matériau composite à base de fibre de carbone et/ou de verre précompressée.

5. Conteneur à double paroi selon l'une quelconque des revendications 1 à 4, caractérisé en ce que l'enceinte interne (3) comprend des moyens de renforcement internes (19).

6. Conteneur à double paroi selon la revendication 5, caractérisé en ce que les moyens de renforcement internes (19) comprennent une pluralité de plaques de renforcement (21) s'étendant transversalement à différents angles au travers de ladite enceinte et à des intervalles réguliers le long de celle-ci.

7. Conteneur à double paroi selon la revendication 5 ou 6, caractérisé en ce que les moyens de renforcement internes (19) comprennent une pluralité de bagues (20) présentant en coupe une forme en "T" soudées intérieurement à ladite enceinte à des intervalles donnés le long de celle-ci, chacune des bagues (20) supportant une pluralité de plaques de renforcement (21) s'étendant transversalement à ladite enceinte et étant parallèles les uns aux autres, les plaques de chaque bague s'étendant à un angle différent de celui de chacune des bagues adjacentes.

8. Conteneur à double paroi selon l'une quelconque des revendications 1 à 7, caractérisé en ce que l'enveloppe externe (5) comprend des moyens de renforcement externes (27).

9. Conteneur à double paroi selon la revendication 8, caractérisé en ce que les moyens de renforcement externes (27) consistent en des renforcements en matériau composite à base de fibres de carbone et/ou de verre solidaires de ladite enveloppe externe.

10. Conteneur à double paroi selon l'une quelconque des revendications 1 à 9, caractérisé en ce que:
- l'enceinte interne (3) présente une surface supérieure (7) et une surface inférieure (9);
- le tuyau d'alimentation obturable (49) présente une sortie (51) située substantiellement à la mi-longueur à l'intérieur de l'enceinte interne, proche de la surface supérieure de celle-ci, et une entrée obturable (53) s'étendant vers l'extérieur de l'enveloppe externe substantiellement au niveau de la surface inférieure de l'enceinte interne;
- le tuyau d'échappement (55) obturable comprend une entrée (57) située à l'intérieur de l'enceinte interne proche de la surface inférieure de celle-ci et une sortie obturable (59) s'étendant vers l'extérieur de l'enveloppe externe substantiellement au niveau de la surface inférieure de ladite enceinte interne.

11. Conteneur à double paroi selon la revendication 10, caractérisé en ce qu'il comprend en outre:
- un tuyau de gaz obturable (61) passant au travers de l'enceinte interne (3) et de l'enveloppe externe (5) pour injecter un gaz à l'intérieur de l'enceinte interne, si demandé, ledit tuyau de gaz présentant une entrée (63) située à l'intérieur de l'enceinte interne proche de la surface inférieure de celle-ci et une sortie obturable (65) s'étendant vers l'extérieur de l'enveloppe externe substantiellement au niveau de la surface inférieure de ladite enceinte interne.

12. Conteneur à double paroi selon la revendication 11, caractérisé en ce que le tuyau d'alimentation obturable (49), le tuyau d'échappement (55) et le tuyau de gaz (61) sont fabriqués en un matériau rigide et s'étendent hermétiquement au travers de l'enceinte interne et de l'enveloppe externe aux extrémités opposées (11,11',25,25') de celles-ci qui sont reliées rigidement l'une à l'autre.

13. Conteneur à double paroi selon l'une quelconque des revendications 1 à 12, caractérisé en ce que chacune des extrémités opposées (11,11') de l'enceinte interne (3) comprend une projection solidaire (13,13') s'étendant le long de l'axe longitudinal et chacune des extrémités opposées (25,25') de l'enveloppe externe (5) comprend un support interne (29) fixé rigidement à l'enveloppe externe et muni d'un orifice (31) pour recevoir et supporter la projection adjacente solidaire.

14. Conteneur à double paroi selon la revendication 14, caractérisé en ce que le support interne (29) comprend une plaque de support circulaire (33) présentant un organe du type moyeu (35) positionné coaxialement à l'axe longitudinal, ledit organe du type moyeu définissant l'orifice pour recevoir et porter la projection adjacente (13,13') de l'enceinte interne (3), ladite plaque circulaire (33) comprenant également un anneau périphérique (37) et une pluralité de nervures de renforcement (39) s'étendant radialement à partir de l'organe du type moyeu (35) vers l'anneau périphérique.

15. Conteneur à double paroi selon la revendication 14, caractérisé en ce que le support interne (29) est fixé à l'enveloppe externe (5) à l'intérieur de celle-ci par fixation de son anneau périphérique (57) à une bague de renforcement coaxiale (41) encastrée dans ladite enveloppe externe.

16. Conteneur à double paroi selon la revendication 13, 14 ou 15, caractérisé en ce que les projections solidaires (13,13') et les orifices correspondants (35) présentent une forme semblable non cylindrique pour empêcher une rotation non souhaitée de l'enceinte interne par rapport à l'enveloppe externe le long de l'axe longitudinal.

17. Conteneur à double paroi selon la revendication 16, caractérisé en ce que les moyens (45,45') pour supporter et manoeuvrer le conteneur à double paroi comprennent une paire d'organes de structure externes (45,45') reliés extérieurement aux extrémités opposées (25,25') de l'enveloppe externe (5), respectivement, chacun desdits organes de structure externes étant fixé rigidement aux bagues de renforcement (41) encastrées dans l'extrémité correspondante de l'enveloppe externe et comprenant une base plate (47) dimensionnée et positionnée à partir de l'axe longitudinal à une distance telle que ledit conteneur à double paroi puisse être posé sur une surface plate avec ledit axe longitudinal s'étendant parallèlement à ladite surface plate.

18. Conteneur à double paroi selon la revendication 17, caractérisé en ce que chacun des organes de structure externes (45,45') présente une forme pentagonale et est pourvu de bords renforcés (46a à 46c), un desdits bords (46e) définissant la base plate.

19. Conteneur à double paroi selon l'une quelconque des revendications 1 à 18, caractérisé en ce que ledit conteneur présente les caractéristiques suivantes:
- une longueur d'environ 25 mètres;
- un diamètre externe d'environ 3,2 mètres;
- un volume d'environ 120 m³; et
- une pression sous vide dans l'espace isolé d'environ 10⁻³ Torr;
- ledit matériau d'isolation (17) consistant en des feuilles d'aluminium rangées alternativement avec des couches de tissu d'isolation de manière à obtenir une conductivité thermique présentant une valeur égale ou inférieure à 0,5 W/cm.K;
ceci permettant au gaz liquéfié introduit dans l'enceinte interne d'être gardé à une température aussi basse que 20°K pendant 30 à 60 jours.

## Patentansprüche

1. Doppelwandiger Behälter (1) für Transport und Lagerung eines verflüssigten Gases bei niedriger Temperatur, wobei der Behälter umfaßt:
- eine innere Umschließung (3), die das verflüssigte Gas enthält und eine Längsachse und ein Paar auf der Längsachse gegenüberliegende Endabschnitte (11, 11') aufweist; und
- eine äußere Umhüllung (5), die die innere Umschließung umgibt, wobei die äußere Umhüllung (5) koaxial zu der Umschließung (3) ist und eine solche Abmessung aufweist, daß ein geschlossener Isolationszwischenraum (23) um die innere Umschließung herum vorhanden ist, wobei die äußere Umhüllung ein Paar auf der Längsachse gegenüberliegende Endabschnitte (25, 25') aufweist;
- wobei die innere Umschließung (3) mit ihren gegenüberliegenden Endabschnitten (11, 11') im Inneren der äußeren Umhüllung (5) aufgehängt ist;
- ein verschließbares Versorgungsrohr (49), das durch die äußere Umhüllung (5) und die innere Umschließung (3) hindurchgeht, um das verflüssigte Gas zum Inneren der inneren Umschließung zu führen; und
- ein verschließbares Ablaßrohr (55), das durch die innere Umschließung (3) und die äußere Umhüllung (5) hindurchgeht, um das verflüssigte Gas aus der inneren Umschließung abzuziehen;
dadurch gekennzeichnet, daß:
- der geschlossene Isolationszwischenraum (23) zwischen der inneren Umschließung und der äußeren Umhüllung unter Vakuum gehalten ist;
- die innere Umschließung (3) eine äußere Oberfläche aufweist, die ganz mit einer feinen Schicht eines Isolationsmaterials (17) bedeckt ist;
- die äußere Umhüllung aus einem Verbundmaterial auf der Grundlage von Karbon- und/oder Glasfasern hergestellt ist;
- einer der gegenüberliegenden Endabschnitte (11) der inneren Umschließung (3) starr mit dem benachbarten Endabschnitt (25) der äußeren Umhüllung (5) verbunden ist, während der andere gegenüberliegende Endabschnitt (11') der Umschließung mit einer Gleitführung mit dem anderen benachbarten Endabschnitt (25') der Umhüllung verbunden ist, so daß eine thermische Ausdehnung der inneren Umschließung und der äußeren Umhüllung gegeneinander möglich ist; und
- eine Einrichtung (45, 45') an den gegenüberliegenden Endabschnitten der äußeren Umhüllung (5) zur Abstützung und Handhabung des doppelwandigen Behälters (1) vorgesehen ist.

2. Doppelwandiger Behälter nach Anspruch 1, dadurch gekennzeichnet, daß das Isolationsmaterial (17), das die äußere Oberfläche der inneren Umschließung bedeckt, aus einer Anzahl von Aluminiumfolien besteht, zwischen denen Schichten eines Isolationsstoffs eingefügt sind.

3. Doppelwandiger Behälter nach Anspruch 1 oder 2, dadurch gekennzeichnet, daß die innere Umschließung (3) aus rostfreiem Stahl hergestellt ist.

4. Doppelwandiger Behälter nach einem der Ansprüche 1 bis 3, dadurch gekennzeichnet, daß die innere Umschließung (3) einen Mittelteil mit konstantem Querschnitt und zwei einander gegenüberliegende Endabschnittsteile aufweist, wobei der Mittelteil eine Wand (12') aufweist, die eine geringere Dicke als die mittlere Dicke der Wand (12) von deren Endabschnittsteilen aufweist und durch eine äußere Schicht (14) eines Verbundmaterials auf der Grundlage von vorverdichteten Karbon- und/oder Glasfasern verstärkt ist.

5. Doppelwandiger Behälter nach einem der Ansprüche 1 bis 4, dadurch gekennzeichnet, daß die innere Umschließung (3) innenliegende Verstärkungseinrichtungen (19) aufweist.

6. Doppelwandiger Behälter nach Anspruch 5, dadurch gekennzeichnet, daß die innenliegenden Verstärkungseinrichtungen (19) eine Anzahl von Verstärkungsplatten (21) beinhalten, die sich in Querrichtung unter verschiedenen Winkeln quer über die Umschließung hinweg und in regelmäßigen Abständen entlang dieser erstrecken.

7. Doppelwandiger Behälter nach Anspruch 5 oder 6, dadurch gekennzeichnet, daß die innenliegenden Verstärkungseinrichtungen (19) eine Anzahl von Ringen (20) beinhalten, die eine T-förmige Querschnittsform besitzen und innen an die Umschließung in vorgegebenen Intervallen entlang dieser angeschweißt sind, wobei jeder Ring (20) eine Anzahl von Verstärkungsplatten (21) trägt, die sich quer zu der Umschließung erstrecken und untereinander parallel sind, wobei sich die Platten eines jeden Rings unter einem anderen Winkel als die benachbarter Ringe erstrecken.

8. Doppelwandiger Behälter nach einem der Ansprüche 1 bis 7, dadurch gekennzeichnet, daß die äußere Umhüllung (5) außenliegende Verstärkungsmittel (27) aufweist.

9. Doppelwandiger Behälter nach Anspruch 8, dadurch gekennzeichnet, daß die außenliegenden Verstärkungsmittel (27) aus Verstärkungen aus einem Verbundmaterial auf der Grundlage von Karbon- und/oder Glasfasern bestehen, die mit der äußeren Umhüllung fest verbunden sind.

10. Doppelwandiger Behälter nach einem der Ansprüche 1 bis 9, dadurch gekennzeichnet, daß:
- die innere Umschließung (3) eine obere Oberfläche (7) und eine untere Oberfläche (9) aufweist;
- das verschließbare Versorgungsrohr (49) einen Ausgang (51) aufweist, der sich im wesentlichen in mittlerer Länge im Inneren der inneren Umschließung befindet, in der Nähe von deren oberer Oberfläche, sowie einen verschließbaren Ausgang (53), der sich zur Außenseite der äußeren Umhüllung erstreckt, im wesentlichen in Höhe der unteren Oberfläche der inneren Umschließung;
- das verschließbare Abzugsrohr (55) einen Eintritt (57) aufweist, der sich auf der Innenseite der inneren Umschließung in der Nähe von deren unterer Oberfläche befindet, und einen verschließbaren Ausgang (59), der sich zur Außenseite der äußeren Umhüllung im wesentlichen in der Höhe der unteren Oberfläche der inneren Umschließung erstreckt.

11. Doppelwandiger Behälter nach Anspruch 10, weiter gekennzeichnet durch
- ein verschließbares Gasrohr (61), das durch die innere Umschließung (3) und die äußere Umhüllung (5) hindurchgeht, um ein Gas in den Innenraum der inneren Umschließung einzudüsen, wenn verlangt, wobei das Gasrohr einen Eintritt (63) aufweist, der sich auf der Innenseite der inneren Umschließung in der Nähe von deren unterer Oberfläche befindet, und einen verschließbaren Ausgang (65), der sich zur Außenseite der äußeren Umhüllung im wesentlichen in Höhe der unteren Oberfläche der inneren Umschließung erstreckt.

12. Doppelwandiger Behälter nach Anspruch 11, dadurch gekennzeichnet, daß das verschließbare Versorgungsrohr (49), das Ablaßrohr (55) und das Gasrohr (61) aus einem starren Material hergestellt sind und sich abgedichtet durch die innere Umschließung und die äußere Umhüllung zu den gegenüberliegenden Endabschnitten (11, 11', 25, 25') erstrecken, die starr miteinander verbunden sind.

13. Doppelwandiger Behälter nach einem der Ansprüche 1 bis 12, dadurch gekennzeichnet, daß jeder der gegenüberliegenden Endabschnitte (11, 11') der inneren Umschließung (3) einen fest damit verbundenen Vorsprung (13, 13') aufweist, der sich entlang der Längsachse erstreckt, und daß jeder der gegenüberliegenden Endabschnitte (25, 25') der äußeren Umhüllung (5) eine innere Abstützung (29) aufweist, die starr an der äußeren Umhüllung fixiert ist und mit einer Öffnung (31) versehen ist, um den benachbarten, fest verbundenen Vorsprung aufzunehmen und zu tragen.

14. Doppelwandiger Behälter nach Anspruch 14, dadurch gekennzeichnet, daß die innere Abstützung (29) eine kreisförmige Abstützfläche (33) aufweist, die ein nabenartiges Teil (35) besitzt, welches koaxial zur Längsachse angeordnet ist, wobei das nabenartige Teil die Öffnung bildet, um den benachbarten Vorsprung (13, 13') der inneren Umschließung (3) aufzunehmen und zu tragen, wobei die kreisförmige Platte (33) auch einen Ümfangsring (37) aufweist und sich eine Anzahl von Verstärkungsrippen (39) radial ausgehend von dem nabenartigen Teil (35) zu den Umfangsring hin erstrecken.

15. Doppelwandiger Behälter nach Anspruch 14, dadurch gekennzeichnet, daß die innere Abstützung (29) an der äußeren Umhüllung (5) an deren Innenseite durch Fixierung ihres Umfangsrings (57) an einem koaxialen Verstärkungsring (41) befestigt ist, der in die äußere Umhüllung eingesetzt ist.

16. Doppelwandiger Behälter nach Anspruch 13, 14 oder 15, dadurch gekennzeichnet, daß die fest verbundenen Vorsprünge (13, 13') und die entsprechenden Öffnungen (35) eine ähnliche, nicht zylindrische Form aufweisen, um eine unerwünschte Verdrehung der inneren Umschließung gegenüber der äußeren Umschließung bezüglich der Längsachse zu verhindern.

17. Doppelwandiger Behälter nach Anspruch 16, dadurch gekennzeichnet, daß die Einrichtung (45, 45') zum Abstützen und Handhaben des doppelwandigen Behälters ein Paar äußerer Strukturteile (45, 45') umfaßt, die außen mit den gegenüberliegenden Endabschnitten (25, 25') der äußeren Umhüllung (5) verbunden sind, wobei jedes der äußeren Strukturteile starr an den Verstärkungsringen (41) fixiert ist, die in den entsprechenden Endabschnitt der äußeren Umhüllung eingesetzt sind, und einen ebenen Sockel (47) aufweist, der so dimensioniert und in einem Abstand von der Längsachse angeordnet ist, daß der doppelwandige Behälter auf eine ebene Fläche gestellt werden kann, die sich parallel zur Längsachse erstreckt.

18. Doppelwandiger Behälter nach Anspruch 17, dadurch gekennzeichnet, daß jedes äußere Strukturteil (45, 45') eine fünfeckige Form aufweist und mit fünf verstärkten Rändern (46a bis 46c) versehen ist, wobei einer der Ränder (46e) den ebenen Sockel bildet.

19. Doppelwandiger Behälter nach einem der Ansprüche 1 bis 18, dadurch gekennzeichnet, daß der Behälter folgende Merkmale aufweiset:
- eine Länge von etwa 25 m;
- einen Außendurchmesser von etwa 3,2 m;
- ein Volumen von etwa 120 m³; und
- einen Unterdruck in dem Isolationszwischenraum von ungefähr 10⁻³ Torr;
- wobei das Isolationsmaterial (17) aus Aluminiumfolien besteht, die abwechselnd mit Schichten aus Isolationsstoff angeordnet sind, so daß eine Wärmeleitfähigkeit erreicht wird, deren Wert gleich oder kleiner als 0,5 W/cm.K ist;
wodurch in die innere Umschließung eingefülltes Flüssiggas bei einer Temperatur von 20°K während 30 bis 60 Tagen gehalten werden kann.

## Claims

1. A double-walled container for transporting and storing a liquified gas at low temperature, said container comprising:
- an inner liquified-gas-holding vessel (3) having a longitudinal axis and a pair of opposite ends (11,11') on said longitudinal axis;
- an outer shell (5) enclosing said inner vessel, said outer shell (5) being coaxial with the vessel (3) and of such a size as to provide a closed insulated space (23) all around the inner vessel, said outer shell having a pair of opposite ends (25,25') on the longitudinal axis;
- the inner vessel (3) being suspended by its opposite ends (11,11') within the outer shell (5);
- a closable feeding pipe (49) passing through the outer shell (5) and the inner vessel (3) for introducing the liquified gas within said inner vessel; and
- a closable exit pipe (55) passing through the inner vessel (3) and the outer shell (5) for draining off the liquified gas from said inner vessel;
characterized in that:
- the closed insulated space (23) between the inner vessel and the outer shell is kept under vacuum;
- the inner vessel (3) has an external surface entirely covered by a thin layer of an insulation material (17);
- the outer shell (5) is made of a carbon- and/or glass-fibre-based composite material;
- one of the opposite ends (11) of the inner vessel (3) is rigidly secured to the adjacent end (25) of the outer shell (5) while the other opposite end (11') of the vessel is slidably connected to the other adjacent end (25') of the shell so as to allow thermal expansion of said inner vessel and said outer shell in relation to one another; and
- means (45,45') are provided at the opposite ends of the outer shell (5) for supporting and handling said double-walled container (1).

2. A double-walled container according to Claim 1, characterized in that the insulation material (17) covering the external surface of the inner vessel consists of a plurality of aluminium foils between which are inserted layers of insulating fabric.

3. A double-walled container according to Claim 1 or 2, characterized in that the inner vessel (3) is made of stainless steel.

4. A double-walled container according to any one of Claims I to 3, characterized in that the inner vessel (3) comprises a central portion of constant cross-section and two opposite end portions, said central portion having a wall (12') which is less thick than the average thickness of the wall (12) of the end portions thereof and being reinforced by an external layer (14) of a precompressed carbon- and/or glass-fibre-based composite material.

5. A double-walled container according to any one of Claims I to 4, characterized in that the inner vessel (3) comprises internal reinforcing means (19).

6. A double-walled container according to Claim 5, characterized in that the internal reinforcing means (19) comprise a plurality of strengthening plates (21) extending tranversely at different angles across said vessel at regular intervals along the same.

7. A double-walled container according to Claim 5 or 6, characterized in that the internal reinforcing means (19) comprise a plurality of rings (20) of T-shaped cross-section internally welded to said vessel at given intervals along the same, each ring (20) supporting a plurality of strengthening plates (21) extending tranversely in parallel relationship across said vessel, the plates of each ring extending at a different angle from that of each adjacent ring.

8. A double-walled container according to any one of Claims 1 to 7, characterized in that the outer shell (5) comprises external reinforcing means (27).

9. A double-walled container according to Claim 8, characterized in that the external reinforcing means (27) consist of reinforcements made of carbon- and/or glass-fibre-based composite material which are integral with said outer shell.

10. A double-walled container according to any one of Claims 1 to 9, characterized in that:
- the inner vessel (3) has a top surface (7) and a bottom surface (9);
- the closable feed pipe (49) has an outlet (51) located substantially at mid-length within the inner vessel, close to the top surface thereof, and a closable inlet (53) extending towards the outside of the outer shell substantially at the level of the bottom surface of the inner vessel;
- the closable exit pipe (55) comprises an inlet (57) located within the inner vessel close to the bottom surface thereof and a closable outlet (59) extending towards the outside of the outer shell substantially at the level of the bottom surface of said inner vessel.

11. Double-walled container according to Claim 10, characterized in that it also comprises:
- a closable gas pipe (61) passing through the inner vessel (3) and the outer shell (5) for injecting a gas within the inner vessel, whenever required, said gas pipe having an inlet (63) located within the inner vessel close to the bottom surface thereof and a closable outlet (65) extending towards the outside of the outer shell substantially at the level of the bottom surface of said inner vessel.

12. A double-walled container according to Claim 11, characterized in that the closable feed pipe (49), exit pipe (55) and gas pipe (61) are made of a rigid material and extend hermetically through the inner vessel and the outer shell at the opposite ends (11,11',25,25') of these which are rigidly connected to one another.

13. A double-walled container according to any one of Claims 1 to 12, characterized in that each of the opposite ends (11,11') of the inner vessel (3) comprises an integral projection (13,13') extending along the longitudinal axis and each of the opposite ends (25,25') of the outer shell (5) comprises an internal support (29) rigidly secured to the outer shell and provided with an aperture (31) for receiving and holding the adjacent integral projection.

14. A double-walled container according to Claim 14, characterized in that the internal support (29) comprises a circular holding plate (33) having a hub-like member (35) coaxially positioned on the longitudinal axis, said hub-like member defining the aperture for receiving and holding the adjacent projection (13,13') of the inner vessel (3), said circular plate (33) also comprising a peripheral ring (37) and a plurality of reinforcing ribs (39) radially extending from the hub-like member (35) towards the peripheral ring.

15. A double-walled container according to Claim 14, characterized in that the internal support (29) is secured to the outer shell (5) within the same by connection of its peripheral ring (57) to a coaxial reinforcing ring (41) embedded in said outer shell.

16. A double-walled container according to Claim 13, 14 or 15 characterized in that the integral projections (13,13') and corresponding apertures (35) are of a similar non-cylindrical shape to prevent unwanted rotation of the inner vessel relative to the outer shell about the longitudinal axis.

17. A double-walled container according to Claim 16 characterized in that the means (45,45') for supporting and handling the double-walled container comprise a pair of external frame members (45,45') externally connected to the opposite ends (25,25') of the outer shell (5), respectively, each of said external frame members being rigidly secured to the reinforcing rings (41) embedded in the corresponding end of the outer shell and comprising a flat base (47) sized and positioned away from the longitudinal axis at such a distance as to allow the double-walled container to be laid onto a flat surface with said longitudinal axis extending parallel to said flat surface.

18. A double-walled container according to Claim 17, characterized in that each of the external frame members (45,45') has a pentagonal shape and is provided with reinforced edges (46a to 46c), one of said edges (46e) defining the flat base.

19. A double-walled container according to any one of Claims 1 to 18, characterized in that said container has the following characteristics:
- a length of approximately 25 metres;
- an external diameter of approximately 3.2 metres;
- a volume of approximately 120 m³; and
- a pressure under vacuum in the insulated space of approximately 10⁻³ Torr;
- said insulating material (17) consisting of aluminium foils alternating with layers of insulating fabric so as to achieve a thermal conductivity having a value equal to or lower than 0.5 W/cm.K;
this allowing the liquified gas introduced into the inner vessel to be kept at a temperature as low as 20°K for 30 to 60 days.
